# EUROPÄISCHE PATENTSCHRIFT

(11) **EP 1 757 846 B1**
(45) Veröffentlichungstag und Bekanntmachung des Hinweises auf die Patenterteilung: **26.11.2008**
(21) Anmeldenummer: 06015940.7
(22) Anmeldetag: 01.08.2006
(51) Int. Cl.: F16H 63/20, F16H 63/30

(54) **Übertragungselement für die Übertragung von Betätigungsbewegungen**
Transmission element for the transmission of actuating-mouvements
Elément de transmission des mouvements d'actuation

(30) Priorität: 27.08.2005 DE 102005040700
(43) Veröffentlichungstag der Anmeldung: 28.02.2007
(73) Patentinhaber: Schaeffler KG, 91074 Herzogenaurach (DE)
(72) Erfinder: Schnapp, Peter, 90431 Nürnberg (DE); Reissberger, Stefan, 96193 Wachenroth (DE)

(56) Entgegenhaltungen:
- EP-A- 0 985 858
- DE-A1- 4 432 382
- DE-A1- 19 831 066
- DE-A1- 19 924 275

## Beschreibung

### Gebiet der Erfindung

Die Erfindung betrifft ein Übertragungselement, mit dem Betätigungsbewegungen übertragbar sind und das zumindest ein fingerartiges Betätigungselement aufnimmt.

### Hintergrund der Erfindung

Ein derartiges Übertragungselement ist in DE 44 32 382 A1 beschrieben. Die Übertragungselemente stehen in Schaltgetrieben von Fahrzeugen mit Schaltstangen oder Schaltwellen in Verbindung. Die Übertragungselemente übertragen Schalt- und oder Wählbewegungen auf Schaltelemente wie Schaltmuffen und Schaltgabeln und sind wechselweise auch zum Sperren bestimmter Wähl- oder Schaltbewegungen vorgesehen.

Das Übertragungselement weist in diesem Fall eine Nabe für den Sitz auf der entsprechenden Welle, wie einer Schaltwelle oder Schaltstange auf. Der Sitz ist verschiebbar oder fest und wahlweise in Drehrichtung oder Schwenkrichtung um eine Schwenkachse des Übertragungselements gegen Verdrehen gesichert.

Das Übertragungselement der Gattung überragt zumeist ein anderes Bauteil und ist um dieses schwenkbar. Dazu weist das Übertragungselement ein hebelartig von einer Nabe abstehendes schalenförmiges Segment aus Blech auf und ist in der Regel halbschalenförmig ausgebildet. Derartige Segmente und auch weitere Teile des Übertragungselements sind als Stanz- und oder Kaltumformteile durch Stanzen, Biegen, Prägen und Ziehen hergestellt und durch Schweißen oder Nieten miteinander verbunden.

Auf dem Segment sitzen mindestens ein Betätigungselement in Form eines Schaltfingers und/oder wenigstens ein weiteres fingerartig abstehende Betätigungselement, wie ein Sperrfinger oder wie ein Finger zum Betätigen von Schaltern oder ähnlichem. Die Übertragungselemente weisen in der Regel Segmente auf, mit denen möglichst viele Funktionen, wie wahlweise das Übertragen und alternativ das Sperren von Wähl- und Schaltbewegungen, vorgenommen werden können. Die Segmente weisen dann auch zwei oder mehr der fingerartigen Betätigungselemente und auch durchgehende Aussparungen, z.B. zum Eingreifen von Sperrelementen, auf.

In modernen kompakten Fahrzeuggetrieben sind die einzelnen Getriebebauteile sehr eng an- bzw. ineinander angeordnet. Deshalb sind den Abmessungen und der Wandstärke der Einzelteile Grenzen gesetzt. Je größer die Anzahl der Einzelteile ist, umso schwieriger ist es, das Betätigungselement beim Zusammenbau mit so wenigen Abweichungen von der Solllage wie möglich zu positionieren und zu befestigen. Außerdem sind relativ viele Werkzeuge zur Herstellung der einzelnen Spanlosteile bereitzustellen. Letzteres führt dazu, dass die Herstellung derartig zusammengesetzter Teile erst ab Stückzahlen für die Großserie wirtschaftlich ist.

### Zusammenfassung der Erfindung

Die Aufgabe der Erfindung ist es daher, ein Übertragungselement zu schaffen, mit dem die zuvor genannten Nachteile vermieden werden.

Diese Aufgabe ist nach dem Gegenstand des Anspruches 1 und weiterer abhängiger Ansprüche gelöst. Das Übertragungselement ist ein einteiliger wenigstens einmal abgewinkelter Hebel. Ein Schenkel des Hebels ist direkt auf einer Welle befestigt. Von dem Schenkel ist ein Arm mit beliebigem, vorzugsweise rechtem Winkel, abgewinkelt. Der Arm ragt frei von dem Schenkel ab. An dem freien Ende des Arms steht das Übertragungselement radial hervor.

Der Schenkel weist an dem zur Welle weisenden Ende entweder eine Aussparung auf, mit der der Schenkel einen Teil des Umfangs der Welle umfasst, oder ist alternativ mit einem Durchgangsloch versehen, durch das die Welle gesteckt ist. Es ist auch denkbar, dass der Schenkel in die Welle eingreift und in der Welle verankert ist.

Eine Ausgestaltung der Erfindung sieht jedoch vor, dass der Schenkel an einer Seite der Welle außen radial auf der Welle aufsitzt und an der Welle befestigt ist. Die Breite des Arms tangential zum Umfang der Welle ist bevorzugt geringer als der Durchmesser der Welle, so dass der Schenkel auf der Welle aufsitzt.

Der Hebel und das Betätigungselement sind bevorzugt Spanlosteile aus Stahl. Der Hebel ist zum Beispiel aus Flachmaterial, das durch Abschneiden und anschließendes Abkanten hergestellt ist. Alternativ ist der Hebel ein Umformteil wie z.B. ein Pressteil aus dünnem Blech, dessen Struktur schalenförmig geprägt oder mit Sicken verstärkt ist. Der Hebel ist von beliebiger Form und kann andere Funktionselemente wie Rampenkonturen aufweisen.

Das Betätigungselement, bevorzugt ein Schaltfinger, ist beispielsweise aus dem Stahlwerkstoff 16MnCr5 aber auch aus beliebigen anderen Stählen und ist auf den Arm aufgesetzt oder in diesen eingelassen und z.B. mit Laser- oder mit Widerstandsschweißen verschweißt oder ist alternativ vernietet. Das Betätigungselement ist wahlweise von dem Arm aus nach innen vorzugsweise radial von der Schwenkachse weg radial nach außen gerichtet.

Eine Ausgestaltung der Erfindung sieht vor, dass der Arm zumindest da, wo das Betätigungselement von dem Ende des Arms absteht, wenigstens eine radiale Verstärkung aufweist. Die radialen Abmessungen des Arms am freien Ende mit der Verstärkung sind größer als die radialen Abmessungen mindestens aller weiteren beliebigen unmittelbar zur Verstärkung umfangsseitig benachbarten Abschnitte zumindest des Arms. Die Verstärkung ist einstückig mit dem Hebel ausgebildet oder auf diesen aufgesetzt und vorzugsweise an dem freien Ende des Arms ausgebildet. Das Betätigungselement ist auf die Verstärkung aufgesetzt und vorzugsweise mit dieser verschweißt aber auch in die Verstärkung eingesetzt und durch Nieten oder Schweißen befestigt. Mit der Verstärkung wird die Basis des Betätigungselementes am Arm verstärkt. Das Abbrechen oder Abreißen des Schaltfingers vom Arm wird verhindert.

Der verstärkte Abschnitt des Armes, auf dem das fingerartige Betätigungselement sitzt, steht aus Platzgründen und funktionsbedingt hebelartig von dem Schenkel ab und verläuft dabei vorzugsweise axial, d.h. in eine der Richtungen, in die die Schwenkachse gerichtet ist.

Die gesamte Baueinheit des Übertragungselements ist vorzugsweise nach dem Zusammenbau zumindest an der gesamten Oberfläche oder zumindest an der Oberfläche der Schaltfinger gehärtet und ggf. gegen Korrosion beschichtet.

Eine derartige Anordnung ist kostengünstig herzustellen und benötigt wenig Bauraum. Durch die einteilige Ausführung des Hebels ist das Betätigungselement sehr genau positionierbar.

### Detaillierte Beschreibung der Zeichnung

Die Erfindung wird nachfolgend anhand von Ausführungsbeispielen näher erläutert.

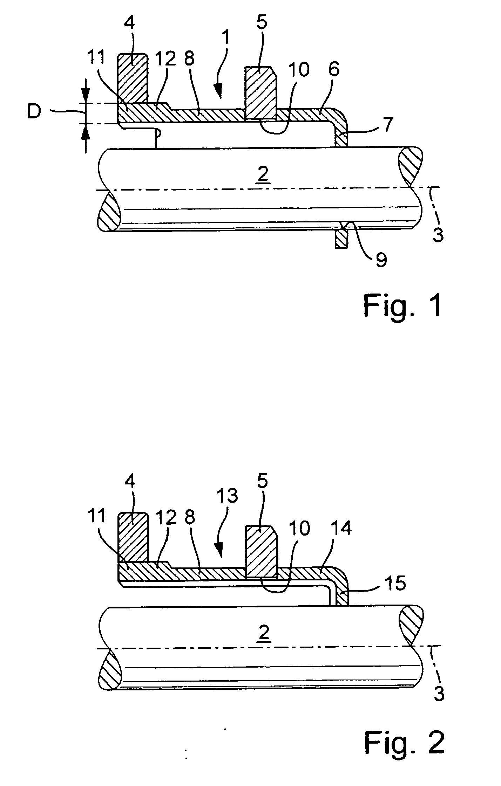

Figur 1, die nicht unter dem Anspruch 1 fällt, zeigt ein Übertragungselement 1 auf einer Welle 2, im Längsschnitt entlang der Schwenkachse 3 des Übertragungselements 1. Mit dem Übertragungselement 1 sind Betätigungsbewegungen, wie zum Beispiel Schalt- und/oder Wählbewegungen übertragbar. Dafür weist das Übertragungselement zwei fingerartige Betätigungselemente 4 und 5 auf, von denen wenigstens das Betätigungselement 4 ein Schaltfinger ist.

Das Übertragungselement 1 weist einen einteiligen wenigstens einmal abgewinkelter Hebel 6 aus Stahlband auf, der aus dem Schenkel 7 und dem Arm 8 gebildet ist. Es ist auch denkbar, dass der Hebel Z- oder U-förmig ausgebildet ist und z.B. auch mit zwei zueinander beabstandeten Schenkeln oder Armen auf der Welle fest ist.

Der Schenkel 7 weist ein Durchgangsloch 9 auf, durch das die Welle 2 hindurch gesteckt ist. Der Schenkel 7 ist direkt mit der Welle 2 durch Schweißen verbunden. Der frei von dem Schenkel 7 abragende Arm 8 ist von dem Schenkel 7 so abgewinkelt, dass der Arm 8 achsparallel zur Schwenkachse 3 ausgerichtet und radial zur Welle 2 beabstandet verläuft.

Das Übertragungselement 5 ist in ein Loch 10 des Arms 8 eingesetzt und an dem Arm 8 befestigt. An dem freien Ende 11 des Arms 8 steht das Übertragungselement 4 radial von der Schwenkachse 3 weg gerichtet hervor.

Der Arm weist an dem freien Ende 11 eine radiale Verstärkung 12 auf. Die Verstärkung 12 ist einstückig mit dem Hebel 6 ausgebildet. Dazu wurde ein Anteil des Material des Hebels 6 an das Ende 11 zur Bildung der Verstärkung verdrängt. Die radiale Abmessung D des Hebels 6 an der Verstärkung 12 ist größer als die übrige Wandstärke des Hebels 6. Das Betätigungselement 4 ist auf die Verstärkung 12 aufgesetzt und mit dieser verschweißt.

Figur 2 zeigt ein Übertragungselement 13, das auf der Welle 2 sitzt, ohne die Welle 2 zu umfassen, im Längsschnitt entlang der Schwenkachse 3 des Übertragungselements 13. Der wesentliche Aufbau des Übertragungselements 13 mit den Betätigungselementen 4 und 5 entspricht dem des zuvor beschriebenen Übertragungselements 1. Das Übertragungselement 13 weist jedoch einen Hebel 14 auf, der an einer Seite der Welle 2 mit einem Schenkel 15 direkt auf die Welle 2 aufgesetzt und an der Welle 2 befestigt wurde, ohne die Welle 2 umfangsseitig zu umfassen.

### Bezugszeichen

- 1: Übertragungselement
- 2: Welle
- 3: Schwenkachse
- 4: Betätigungselement
- 5: Betätigungselement
- 6: Hebel
- 7: Schenkel
- 8: Arm
- 9: Durchgangsloch
- 10: Loch
- 11: Ende
- 12: Verstärkung
- 13: Übertragungselement
- 14: Hebel
- 15: Schenkel

## Patentansprüche

1. Übertragungselement (1, 13), mit dem Betätigungsbewegungen übertragbar sind und das zumindest ein fingerartiges Betätigungselement (4, 5) aufnimmt, wobei das Übertragungselement (1, 13) zumindest einen einteiligen wenigstens einmal abgewinkelten Hebel (6, 15) aufweist und dabei ein Schenkel (7, 15) des Hebels (6, 14) direkt auf einer Welle (2) befestigt ist und wobei von dem Schenkel (7, 15) ein Arm (8) abgewinkelt ist und frei abragt und dabei zumindest an dem freien Ende (11) des Arms (8) das Übertragungselement (1, 13) radial hervorsteht, ***dadurch gekennzeichnet, dass** der Schenkel (15) an einer Seite der Welle (2) außen radial auf der Welle (2) aufsitzt und an der Welle (2) befestigt ist, wobei der Schenkel einen Teil des Umfangs der Welle umfasst.*

2. *Übertragungselement nach Anspruch 1, **dadurch gekennzeichnet, dass** der Schenkel so auf der Welle aufsitzt, dass die Breite des Arms tangential zum Umfang der Welle geringer ist als der Durchmesser der Welle.*

3. Übertragungselement nach Anspruch 1, bei dem der Arm (8) zumindest da, wo das Betätigungselement (4) von dem Ende (11) des Arms (8) absteht, wenigstens eine radiale Verstärkung (12) aufweist, wobei die radialen Abmessungen des Arms (8) an der Verstärkung (12) größer sind als radiale Abmessungen mindestens aller weiteren beliebigen unmittelbar zur Verstärkung (12) umfangsseitig benachbarten Abschnitte des Übertragungselements (1, 13).

4. Übertragungselement nach Anspruch 3, bei dem die Verstärkung (12) einstückig mit dem Hebel (6, 149 ausgebildet ist.

5. Übertragungselement nach Anspruch 3, beim dem das Betätigungselement (4) auf die Verstärkung (12) aufgesetzt ist.

6. Übertragungselement nach Anspruch 3, bei dem das Betätigungselement (4) mit der Verstärkung (12) verschweißt ist.

7. Übertragungselement nach Anspruch 1, bei dem der Hebel (6, 14) und das Betätigungselement (4, 5) Spanlosteile aus Stahl sind.

8. Übertragungselement nach Anspruch 1, **dadurch gekennzeichnet, dass** das Betätigungselement (4) ein Schaltfinger ist.

## Claims

1. Transmission element (1, 13) through which actuating movements can be transmitted and that receives at least one finger-type actuating element (4, 5), said transmission element (1, 13) comprising at least one one-piece lever (6, 14) that is bent at least once at an angle, a leg (7, 15) of the lever (6, 14) being fixed directly on a shaft (2), an arm (8) being bent from the leg (7, 15) to project freely, and the transmission element (1, 13) protruding in radial direction at least at the free end (11) of the arm (8), **characterised in that** the leg (15) is seated radially outside on the shaft (2) on one side of the shaft (2) while being fixed to the shaft (2), and the leg surrounds a part of the periphery of the shaft.

2. Transmission element according to claim 1, **characterised in that** the leg is seated in such a way on the shaft that the width of the arm in tangential direction relative to the periphery of the shaft is smaller than the diameter of the shaft.

3. Transmission element according to claim 1, **characterised in that,** at least at the point where the actuating element (4) projects from the end (11) of the arm (8), the arm (8) comprises at least one radial reinforcement (12), the radial dimensions of the arm (8) on the reinforcement (12) being larger than radial dimensions of at least all further sections of the transmission element (1, 13) that are peripherally directly adjacent to the reinforcement (12).

4. Transmission element according to claim 3, **characterised in that** the reinforcement (12) is configured in one piece with the lever (6, 14).

5. Transmission element according to claim 3, **characterised in that** the actuating element (4) is seated on the reinforcement (12).

6. Transmission element according to claim 3, **characterised in that** the actuating element (4) is welded to the reinforcement (12).

7. Transmission element according to claim 1, **characterised in that** the lever (6, 14) and the actuating element (4, 5) are made out of steel without chip removal.

8. Transmission element according to claim 1, **characterised in that** the actuating element (4) is a gearshift finger.

## Revendications

1. Elément (1, 13) de transmission au moyen duquel des mouvements de transmission peuvent être transmis et qui reçoit, au moins, un élément (4, 5) d'actionnement en forme de doigt, l'élément (1, 13) de transmission comprenant, au moins, un levier (4, 14) monobloc qui est replié, au moins, une fois, une branche (7, 15) du levier (6, 15) étant fixée directement à un arbre (2), un bras (8) étant replié à partir de la branche (7, 15) pour faire librement saillie, et l'élément (1, 13) de transmission faisant radialement saillie, au moins, sur l'extrémité (11) libre du bras (8), **caractérisé en ce que** la branche (15) est assiégée sur un côté de l'arbre (2) radialement vers l'extérieur en étant fixée à l'arbre (2), ce bras entourant une partie de la périphérie de l'arbre.

2. Elément de transmission selon la revendication 1, **caractérisé en ce que** la branche est assiégée de telle façon sur l'arbre, que la largeur du bras en direction tangentielle à la périphérie de l'arbre est inférieure au diamètre de l'arbre.

3. Elément de transmission selon la revendication 1, **caractérisé en ce que,** au moins, à l'endroit où l'élément (4) d'actionnement fait saillie à partir de l'extrémité (11) du bras (8), ce bras (8) comprend, au moins, un renforcement radial (12), les dimensions radiales du bras (8) au niveau du renforcement (12) étant supérieures à des dimensions radiales, au moins, de toutes autres sections de l'élément (1, 13) de transmission qui sont directement adjacentes au renforcement (12) du côté périphérique.

4. Elément de transmission selon la revendication 3, **caractérisé en ce que** le renforcement (12) est configuré en une seule pièce avec le levier (6, 14).

5. Elément de transmission selon la revendication 3, **caractérisé en ce que** l'élément (4) d'actionnement est disposé sur le renforcement (12).

6. Elément de transmission selon la revendication 3, **caractérisé en ce que** l'élément (4) d'actionnement est soudé au renforcement (12).

7. Elément de transmission selon la revendication 1, **caractérisé en ce que** le levier (6, 14) et l'élément (4, 5) d'actionnement sont faits en acier sans enlèvement de copeaux.

8. Elément de transmission selon la revendication 1, **caractérisé en ce que** l'élément (4) d'actionnement est un doigt de changement de vitesse.
